# EUROPEAN PATENT SPECIFICATION

(11) **EP 3 571 244 B1**
(45) Date of publication and mention of the grant of the patent: **16.03.2022**
(21) Application number: 18700355.3
(22) Date of filing: 16.01.2018
(51) Int. Cl.: C08J 9/00, C08J 9/12, C08L 67/02, C08K 5/00

(54) **FOAMED COMPOSITION**
EXPANDIERTE ZUSAMMENSETZUNG
COMPOSITION EXPANSÉE

(30) Priority: 20.01.2017 WO PCT/CN2017/071854; 23.01.2017 CN 201710053352; 10.02.2017 EP 17155633; 03.10.2017 EP 17194622
(43) Date of publication of application: 27.11.2019
(73) Proprietor: DSM IP Assets B.V., 6411 TE Heerlen (NL)
(72) Inventor: ROOZEMOND, Peter, 6100 AA Echt (NL); ZHENG, Lidong, 6100 AA Echt (NL); VAN HEMELRIJCK, Ellen, 6100 AA Echt (NL)
(74) Representative: DSM Intellectual Property
(86) International application number: PCT/EP2018/050922
(87) International publication number: WO 2018/134166

(56) References cited:
- WO-A1-2014/170217
- WO-A2-2010/039616
- US-A1- 2015 025 163

## Description

This invention relates to a foamed composition, an article comprising the foamed composition, as well as a process for preparing the foamed composition.

Foamed compositions are known and are for example described in EP 0 610 953 A1 and WO 2014/170217 A1 . A disadvantage of these foams is that they may show cracks, especially when low density foams are required. Without wishing to be bound by theory the inventors believe that cracks are formed by overstretching of cell walls, causing rupture and cascading failure of cells leading to formation of a big bubble. After foaming, a bubble is usually visible, which disappears over time, and leaving a socalled crack.

It is thus an object of the present invention to provide a foamed composition which exhibits less cracks at lower densities. This object is achieved by a foamed composition comprising a thermoplastic copolyester elastomer as defined in claim 1 in an amount of between 70 to 99 wt% and a plasticizer in an amount of between 1 to 30 wt% based on the total amount of the composition.

Surprisingly, the inventors have found that the presence of a plasticizer in combination with a thermoplastic copolyester elastomer results in the possibility to achieve low density foams which exhibit less cracks. Lower density crack-free foams are very attractive as it is an important selling argument in applications where light-weight is favorable, for example sports shoes.

A foamed composition is herein understood to be known to a person skilled in the art.

A thermoplastic copolyester elastomer is generally understood to be a copolymer comprising hard segments built up from polyester repeating units derived from at least one aliphatic diol and at least one aromatic dicarboxylic acid or an ester thereof, and soft segments chosen from the group consisting of aliphatic polyether, aliphatic polyester, aliphatic polycarbonate, dimer fatty acids and dimer fatty diols and combinations thereof.

A thermoplastic copolyester elastomer may contain minor amounts of comonomers, such as branching agents, chain extenders, and catalysts, which are usually employed during preparation of the thermoplastic copolyester elastomer. With minor amounts is herein understood to be at most 10 wt% with respect to the total amount of thermoplastic copolyester elastomer. An example of such comonomer is dimethyl isophthalate (DMI).

Hard segments are usually built up from polyester repeating units derived from at least one aliphatic diol and at least one aromatic dicarboxylic acid or an ester thereof and optionally minor amounts of other diacids and/or diols.

Aliphatic diols contain generally 2-10 C-atoms, preferably 2-6 C-atoms. Examples thereof include ethylene glycol, 1,2-propylene glycol, 1,3-propylene glycol, butylene glycol, 1,2-hexane diol, 1,6-hexamethylene diol, 1,4-butanediol, 1,4-cyclohexane diol, 1,4-cyclohexane dimethanol, and mixtures thereof. Preferably, 1,4-butanediol is used.

Aromatic dicarboxylic acids include terephthalic acid, isophthalic acid, phthalic acid, 2,6-naphthalenedicarboxylic acid and 4,4'-diphenyldicarboxylic acid, and mixtures thereof.

The hard segment is chosen from polybutylene terephthalate (PBT) or polyethylene terephthalate (PET).

Preferably, the hard segment is butylene terephthalate (PBT), as thermoplastic copolyester elastomers comprising hard segments of PBT exhibit favourable crystallisation behaviour and a high melting point, resulting in thermoplastic copolyester elastomer with good processing properties and excellent thermal and chemical resistance.

Generally, soft segments chosen from aliphatic polyesters have repeating units derived from an aliphatic diol, and an aliphatic dicarboxylic acid or repeating units derived from a lactone. Aliphatic diols contain generally 2-20 C-atoms, preferably 3-15 C-atoms in the chain and an aliphatic dicarboxylic acid containing 2 - 20 C atoms, preferably 4 - 15 C atoms. Examples thereof include ethylene glycol, propylene glycol, butylene glycol, 1,2-hexane diol, 1,6-hexamethylene diol, 1,4-butanediol , cyclohexane diol, cyclohexane dimethanol, and mixtures thereof. Preferably, 1,4-butanediol is used. Aliphatic dicarboxylic acids include sebacic acid, 1,3-cyclohexane dicarboxylic acid, 1,4-cyclohexane dicarboxylic acid, adipic acid, glutaric acid, 2-ethylsuberic acid, cyclopentanedicarboxylic acid, decahydro-1,5-naphtylene dicarboxylic acid, 4,4'-bicyclohexyl dicarboxylic acid, decahydro-2,6-naphthylene dicarboxylic acid, 4,4'-methylenebis (cyclohexyl)carboxylic acid and 2,5-furan dicarboxylic acid. Preferred acids are sebacic acid, adipic acid, 1,3-cyclohexane dicarboxylic acid, 1,4-cyclohexane dicarboxylic acid. Most preferred is adipic acid.

A soft segment may be aliphatic polyethers, which may comprise units of polyalkylene oxides, such as polyethylene oxide and polypropylene oxide and polytetramethylene oxide and combinations thereof, either as individual segment or combined in one segment. A combination is for example ethylene oxide-capped polypropylene oxide.

The soft segment is chosen from the group consisting of poly(ethylene oxide) (PEO), polypropylene oxide (PPO) and polytetramethylene oxide (PTMO), PEO-PPO-PEO, and combinations thereof.

A preferred soft segment is polytetramethylene oxide (PTMO). Also soft segments comprising a block copolymer in which two types of glycols are reacted to form a soft segment such as based on poly(ethylene oxide) (PEO) and polypropylene oxide (PPO). The latter is also referred to as PEO-PPO-PEO, as the PEO blocks are at the ends of a soft segment as PEO reacts best with a hard segment. PTMO, PPO and PEO based soft segments allow for foams having a lower density.

The foamed composition comprises a thermoplastic copolyester elastomer having hard and soft segments, wherein the hard segment is chosen from PBT or PET and the soft segment is chosen from the group consisting of polybutylene adipate (PBA) poly(ethylene oxide) (PEO), polypropylene oxide (PPO), polytetramethylene oxide (PTMO), PEO-PPO-PEO and combinations thereof, as this provided an article exhibiting low densities.

Plasticizers are known substances to a person skilled in the art per se, and for example lowers the hardness and/or increases the strain at break of the composition as compared to the elastomer itself. Plasticizers are present in an amount of between 1 to 30 wt% based on the total amount of the composition, preferably between 5 to 25 wt% and even more preferred between 8 to 20 wt%.

Plasticizers include for example phthalate esters, dibasic acid esters, mellitates and esters thereof, cyclohexanoate esters, citrate esters, phosphate esters, modified vegetable oil esters, benzonate esters, and petroleum oils, and combinations thereof.

Examples of phthalates include dioctyl phthalate, dibutyl phthalate, diethyl phthalate, butylbenzyl phthalate, di-2-ethylhexyl phthalate, diisodecyl phthalate, diundecyl phthalate, diisononyl phthalate, diethyl hexyl terephthalate (DEHT), dioctyl terephthalate, dibutyl terephathalate.

Examples of dibasic acid esters include di-2-ethylhexyl adipate (DEHA), dioctyl adipate, diisobutyl adipate, dibutyl adipate, diisodecyl adipate, dibutyl glycol adipate, di-2-ethylhexyl azelate and dioctyl sebacate.

Examples of mellitates and esters thereof include trioctyl trimellitate, trimellitic acid tri-2-ethylhexyl and pyromellitic acid octyl ester.

Examples of cyclohexanoate esters include cyclohexanedicarboxylic acid ester, 2-ethyl hexanol cyclohexanedicarboxylic acid ester.

Example of phosphate esters include Triphenyl phosphate (TPP), tert-Butylphenyl diphenyl phosphate (Mono-t-but-TPP), di-tert-butylphenyl phenyl phosphate (bis-t-but-TPP), Tris(p-tert-butylphenyl) phosphate (tri-t-but-TPP), Resorcinol bis (Diphenyl Phosphate) (RDP), dichloropropyl phosphate, Bisphenol A bis-(Diphenyl Phosphate) (BDP), tricresyl phosphate (TCP), triethyl phosphate, tributyl phosphate (TBP), tri-2-ethylhexyl phosphate, trimethyl phosphate and combinations thereof. A blend of TPP, mono-t-But-TPP, Bis-t-But-TPP, Tri-t-But-TPP is also known under the name Phosflex 71B HP and is particularly suitable, as it is easily mixed with the thermoplastic elastomer.

Examples of modified vegetable oil esters include epoxidized soybean oil (ESO), epoxidized palm oil (EPO), epoxidized linseed oil (ELO) and Argan oil.

Preferably, phosphate esters and modified vegetable oil esters are being employed, as these are commonly used plasticizers and easily processable.

In a particular preferred embodiment the foamed composition comprising a thermoplastic copolyester elastomer in an amount of between 70 to 99 wt% and a plasticizer in an amount of between 1 to 30 wt% based on the total amount of the composition wherein thermoplastic copolyester elastomer comprises hard and soft segments wherein the hard segment is chosen from PBT or PET and the soft segment is chosen from the group consisting of poly(ethylene oxide) (PEO), polypropylene oxide (PPO) and polytetramethylene oxide (PTMO) and combinations thereof and the plasticizer is chosen from the group consisting of Triphenyl phosphate (TPP), tert-Butylphenyl diphenyl phosphate (Mono-t-but-TPP), di-tert-butylphenyl phenyl phosphate (bis-t-but-TPP), Tris(p-tert-butylphenyl) phosphate (tri-t-but-TPP), Resorcinol bis (Diphenyl Phosphate) (RDP), dichloropropyl phosphate, Bisphenol A bis-(Diphenyl Phosphate) (BDP), tricresyl phosphate (TCP), triethyl phosphate, tributyl phosphate (TBP), tri-2-ethylhexyl phosphate, trimethyl phosphate, epoxidized soybean oil (ESO), epoxidized palm oil (EPO), epoxidized linseed oil (ELO) and argan oil and combinations thereof. In an even more preferred embodiment, the plasticizer is chosen from the group consisting of ESO, ELO, Phosflex 71 B HP (a blend of TPP, mono-t-But-TPP, Bis-t-But-TPP, Tri-t-But-TPP), RDP, BDP, TCP and TPP, and combinations thereof, as these plasticizers are readily available.

The invention also relates to a process for preparing a foamed composition, comprising the following steps:
a. Providing a composition comprising the thermoplastic copolyester elastomer in an amount of between 70 to 99 wt % and a plasticizer in an amount of between 1 to 30 wt% based on the total amount of the composition,
b. Bringing the composition to a foaming temperature of between (Tm-100) °C and Tm, in which Tm is the melting temperature of the hard segment of the thermoplastic copolyester elastomer composition as measured according to ISO 11357-1:1997 DSC in the second heating curve, with a heating and cooling rate of 10 °C per min under nitrogen atmosphere;
c. Providing a physical blowing agent under pressure to the composition while maintaining the pressure;
d. Releasing the pressure thereby forming the foamed composition.

The preferred embodiments of the foamed compositions as disclosed above are herewith explicitly combinable with the process as disclosed above. In step a. a composition is provided. This may be in various forms, and for example includes granules, pellets, beads, chips, plaques, pre-form, film, sheet etc. The process may further comprise additional steps after step d to further process the foamed composition, such as cutting a form out of the foamed composition, and/or combining foamed compositions into parts, such as for example by steam moulding, high frequency welding, incorporation into a matrix and other consolidation techniques. The foamed compositions may be in the form of foamed beads, and subsequently consolidated by for example heating with steam to mould the foamed beads together into a part in for example a mold or consolidated by other techniques. A mold may be filled with foamed compositions in various forms, such as foamed beads, and subsequently steam is injected, sintering the foamed compositions together to form a part.

The process is particularly suitable for a composition comprising a thermoplastic copolyester elastomer comprising hard segments chosen from PBT or PET and soft segments chosen from the group consisting of poly(ethylene oxide) (PEO), polypropylene oxide (PPO), polytetramethylene oxide (PTMO), PEO-PPO-PEO and combinations thereof and the plasticizer is chosen from group consisting of Triphenyl phosphate (TPP), tert-Butylphenyl diphenyl phosphate (Mono-t-but-TPP), di-tert-butylphenyl phenyl phosphate (bis-t-but-TPP), Tris(p-tert-butylphenyl) phosphate (tri-t-but-TPP), Resorcinol bis (Diphenyl Phosphate) (RDP), dichloropropyl phosphate, Bisphenol A bis-(Diphenyl Phosphate) (BDP), tricresyl phosphate (TCP), triethyl phosphate, tributyl phosphate (TBP), tri-2-ethylhexyl phosphate, trimethyl phosphate, epoxidized soybean oil (ESO), epoxidized palm oil (EPO), epoxidized linseed oil (ELO) and argan oil and combinations thereof.

With "bringing the composition to a foaming temperature" is herein understood to encompass both heating as well as cooling to come to the desired temperature.

The above disclosed thermoplastic copolyester and plasticizers are particularly suitable to be employed in the process.

Step b and c can be done simultaneously, or first b and then c, or first c and then b in which step b has to be performed under a pressure to prevent the composition from foaming. An example when step c is performed before step b, is when the physical blowing agent is added under pressure (step c) while the composition is in a molten state, after which the composition is injected in a cavity (a mold) and cooled, while kept under pressure, to the foaming temperature (step b). One of the possible advantages of such a process is faster take up of the physical blowing agent by the composition.

Before step b, the composition may be molded into a pre-form, by processes such as molding.

With physical blowing agent is herein understood to be a substance which may dissolve in the composition, without reacting or decomposing. Physical blowing agent may for example be chosen from hydrocarbons such as pentane, isopentane, cyclopentane, butane, isobutene and CO₂ and nitrogen as well as mixtures thereof. Typical pressures for CO₂ in step c are 200 bar.

In step b, the composition is brought to a foaming temperature of between (Tm-100) °C and Tm, in which Tm is the melting temperature of the hard segment of the thermoplastic copolyester elastomer composition as measured according to ISO 11357-1:1997 DSC in the second heating curve, with a heating and cooling rate of 10 °C per min under nitrogen atmosphere. This may be performed by heating or cooling depending on the temperature employed before step b.

The foaming temperature in step b is preferably at most (Tm - 5), more preferably at most (Tm-10), most preferred at most (Tm-15). The foaming temperature in step b is preferably at least (Tm-80), more preferably at least (Tm-60), most preferred at least (Tm-40), as this provides foams with lower densities.

When step b is a heating step, the heating is preferably done to a temperature of at most (Tm - 5), more preferably at most (Tm-10), most preferred at most (Tm-15). The heating in step b preferably done to a temperature of at least (Tm-80), more preferably at least (Tm-60), most preferred at least (Tm-40), as this provides foams with lower densities. Heating is usually performed by an external heat source while keeping the composition in a pressure vessel.

Step b may also be a cooling step, in which the temperature is lowered to a foaming temperature of at most (Tm - 5), more preferably at most (Tm-10), most preferred at most (Tm-15). The foaming temperature is preferably cooled to at least (Tm-80), more preferably at least (Tm-60), most preferred at least (Tm-40). An example of cooling may be when a composition is molded into a pre-form at a temperature above the foaming temperature.

Step d is preferably done in manner so that the pressure is released as fast as possible, preferably pressure drop of at least 100 Bar per second, more preferably at least 500 Bar per second.

The process to prepare the foamed composition as described above is generally known as a batch foaming or solid state foaming process and is to be distinguished from extrusion foaming. In a process for extrusion foaming the composition is generally to be heated to above its melting temperature.

Surprisingly, the process resulted in foams exhibiting less cracks, which allowed for very low density foams.

The foamed composition may optionally comprise other ingredients such as colorants, pigments, nucleating agents, flame retardants, UV - stabilizers, heat - stabilizers.

The foamed composition is very suitable for application in articles for sport goods, such as shoe soles, preferably inner shoe soles or midsoles, seatings, matrasses, golf balls, as the article shows a combination of low density and a high energy return. The invention thus also relates to an article comprising the foamed composition as disclosed above.

Surprisingly the foamed composition has a density of between 0.15 to 0.5 g/cm³ and even more preferred between 0.2 and 0.30 g/cm³. Surprisingly, the foamed composition according to the invention exhibits low densities, which may be preferably between 0.1 to 0.5 g/cm³, more preferably between 0.1 to 0.3 g/cm³. Lower densities allow for lighter material.

Particularly when the soft segment is chosen from the group consisting of poly(ethylene oxide) (PEO), polypropylene oxide (PPO) and polytetramethylene oxide (PTMO), PEO-PPO-PEO, and combinations thereof, a density of between 0.12 and 0.30 g/cm³ could be obtained.

### Examples

### Materials used

Elastomer A: A copolyether-ester elastomer comprising 55wt% polytetramethylene oxide soft segment and poly butylene terephthalate (PBT) hard segment, having a shore D hardness of 33 (ISO 868) and MFI of 33 cm³/10min at 2.16 kg load at 230°C (ISO 1133) and a melting temperature of the hard segment in the thermoplastic copolyester elastomer being 161.5°C as measured with DSC according to ISO 11357-1:1997 in the second heating curve, with a heating and cooling rate of 10 °C per min, under nitrogen atmosphere.
ESO: epoxidized soybean oil
Phosflex: Phosflex 71B HP, which is a blend of TPP, mono-t-But-TPP, Bis-t-But-TPP, Tri-t-But-TPP.
BDP: Bisphenol A bis-(Diphenyl Phosphate)

### Sample preparation

The compositions for foaming were prepared by compounding Elastomer A with varying plasticizer types and amounts as listed in Table 1. The melting temperature listed in Table 1 is the peak melting temperature of the hard segment in the thermoplastic copolyester elastomer composition during second heating cycle in a DSC at heating and cooling rates of 10 °C/min under nitrogen atmosphere. Subsequently, plates were injection molded with lateral dimensions of 80*80 mm and different thicknesses as listed in Table 1. Samples with lateral dimensions of 15*15 mm were cut out of these plates for foaming tests.

### Foaming

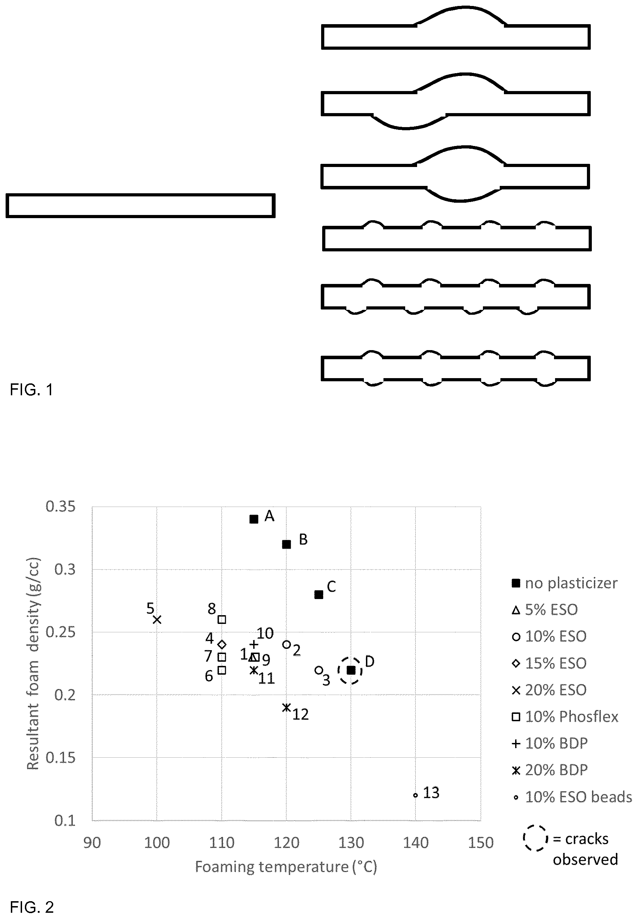

- The sample with lateral dimensions of 15*15 mm and thickness as listed in Table 1 was placed in a pressure vessel that was electrically heated to the foaming temperature listed in Table 1. In Example 13, granules (also referred to as beads) of the specified composition with dimensions ranging between 3 and 5 mm were placed in a pressurized vessel that was electrically heated to the foaming temperature listed in Table 1.
- Subsequently, cavity was filled with CO₂ at the pressure listed in Table 1 by a CO₂ canister connected to the pressure vessel via a booster pump
- The composition was allowed to absorb CO₂ for the soaking time listed in Table 1
- The pressure vessel was opened, thus achieving a fast pressure drop resulting in the foamed composition.
- Samples were visually inspected within one minute after opening the pressure vessel for bubbles on the surface, indicating the presence of cracks in the interior of the sample. Examples of samples showing indications of cracks are depicted in Figure 1 right column. The left column of Figure 1 shows a sample containing no cracks.
- Volume of the sample was determined by measuring length, width, and thickness using a vernier gauge after 24 hours after foaming to allow the CO₂ still present in the sample to diffuse out. Mass of the sample was determined by weighing and density of the sample was determined by dividing mass by volume.

**Table 1**

| | Material | Plasticizer | Tₘ of composition | CO₂ Pressure | Foaming Temperature | Density | Sample Thickness | Soaking time | Cracks |
|---|---|---|---|---|---|---|---|---|---|
| | | | (°C) | (bar) | (°C) | (g/cm³) | (mm) | (min) | |
| Comp Ex A | Elastomer A | - | 161.5 | 200 | 115 | 0.34 | 2 | 15 | no |
| Comp Ex B | Elastomer A | - | 161.5 | 200 | 120 | 0.32 | 2 | 15 | no |
| Comp Ex C | Elastomer A | - | 161.5 | 200 | 125 | 0.28 | 2 | 15 | no |
| Comp Ex D | Elastomer A | - | 161.5 | 200 | 130 | 0.22 | 2 | 15 | yes |
| | | | | | | | | | |
| Ex1 | Elastomer A | 5% ESO | 160.5 | 200 | 115 | 0.23 | 4 | 25 | no |
| Ex2 | Elastomer A | 10% ESO | 160.1 | 200 | 120 | 0.24 | 3.4 | 15 | no |
| Ex3 | Elastomer A | 10% ESO | 160.1 | 200 | 125 | 0.22 | 3.4 | 15 | no |
| Ex4 | Elastomer A | 15% ESO | 160.0 | 200 | 110 | 0.24 | 4 | 25 | no |
| Ex5 | Elastomer A | 20% ESO | 159.7 | 200 | 100 | 0.26 | 4 | 25 | no |
| Ex6 | Elastomer A | 10% Phosflex | 158.4 | 200 | 110 | 0.22 | 4 | 25 | no |
| Ex7 | Elastomer A | 10% Phosflex | 158.4 | 140 | 110 | 0.23 | 4 | 25 | no |
| Ex8 | Elastomer A | 10% Phosflex | 158.4 | 140 | 110 | 0.26 | 2 | 15 | no |
| Ex9 | Elastomer A | 10% Phosflex | 158.4 | 140 | 115 | 0.23 | 2 | 15 | no |
| Ex10 | Elastomer A | 10% BDP | 159.9 | 200 | 115 | 0.24 | 4 | 25 | no |
| Ex11 | Elastomer A | 20% BDP | 157.5 | 200 | 115 | 0.22 | 4 | 25 | no |
| Ex12 | Elastomer A | 20% BDP | 157.5 | 200 | 120 | 0.19 | 4 | 25 | no |
| Ex13 | Elastomer A | 10% ESO | 160.5 | 200 | 140 | 0.12 | Beads: 3-5mm | 5 | no |

Figure 2 provides a graph in which the resultant foam density in (g/cm³) (y-axis) is shown against the foaming temperature in °C (x-axis). Comparative experiments A - D are shown as ■ filled square. The figure shows that either only high densities without cracks (Comp Ex A-C), or low densities with cracks could be obtained (Comparative experiment D). For the examples comprising a plasticizer, much lower densities could be obtained, without crack formation (see examples 1 to 13 in Figure 2). The described examples show that without the addition of plasticizer it is not possible to produce crack-free foams with density lower than 0.28 g/cm³ (see Comparative experiments A to D), whereas the addition of plasticizer to the composition enabled the production of crack-free foams with densities as low as 0.19 g/cm³ (see Examples 1 to 12). For granules, crack-free foams with densities as low as 0.12 g/cm³ were reached (see Example 13).

## Claims

1. Foamed composition comprising a thermoplastic copolyester elastomer in an amount of between 70 to 99 wt%, said elastomer comprising hard and soft segments, and a plasticizer in an amount of between 1 to 30 wt% based on the total amount of the composition, wherein the hard segment is chosen from polybutylene terephthalate (PBT) or polyethylene terephthalate (PET), and the soft segment is chosen from the group consisting of poly(ethylene oxide) (PEO), polypropylene oxide (PPO) and polytetramethylene oxide (PTMO), PEO-PPO-PEO, and combinations thereof.

2. Foamed composition according to claim 1, wherein the density of the foamed composition is between 0.15 and 0.5 g/cm³.

3. Foamed composition according to claim 1, wherein the density of the foamed composition is between 0.1 and 0.3 g/cm³.

4. Foamed composition according to claim 1, wherein the density of the foamed composition is between 0.12 and 0.3 g/cm³.

5. Foamed composition according to any of the claims above, wherein the amount of plasticizer is between 5 and 25 wt% with respect to the total amount of the composition.

6. Foamed composition according to any of the claims above, wherein the amount of plasticizer is between 8 and 20 wt% with respect to the total amount of the composition.

7. Foamed composition according to any of the claims above, wherein the plasticizer is chosen from the group consisting of (tere)phthalates and esters thereof, dibasic acid esters, mellitates and esters thereof, cyclohexanoate esters, citrate esters, phosphate esters, modified vegetable oil esters, benzonate esters, and petroleum oils and combinations thereof.

8. Foamed composition according to any of the claims above, wherein the plasticizer is chosen from the group consisting of Triphenyl phosphate (TPP), tert-Butylphenyl diphenyl phosphate (Mono-t-but-TPP), di-tert-butylphenyl phenyl phosphate (bis-t-but-TPP), Tris(p-tert-butylphenyl) phosphate (tri-t-but-TPP), Resorcinol bis (Diphenyl Phosphate) (RDP), dichloropropyl phosphate, Bisphenol A bis-(Diphenyl Phosphate) (BDP), tricresyl phosphate (TCP), triethyl phosphate, tributyl phosphate (TBP), tri-2-ethylhexyl phosphate, trimethyl phosphate, epoxidized soybean oil (ESO), epoxidized palm oil (EPO), epoxidized linseed oil (ELO), argan oil and combinations thereof.

9. Foamed composition according to any of the above claims, wherein the plasticizer includes epoxidized soybean oil (ESO), epoxidized palm oil (EPO), epoxidized linseed oil (ELO), and argan oil .

10. Article comprising the foamed composition according to any of the above claims.

11. Article according to claim 10, wherein the article is an inner shoe sole or a midsole.

12. Solid state foaming process for preparing a foamed composition according to any of the claims 1 to 9, comprising the following steps:
a. Providing a composition comprising a thermoplastic copolyester elastomer in an amount of between 70 to 99 wt%, said elastomer comprising hard and soft segments, and a plasticizer in an amount of between 1 and 30 wt% based on the total amount of the composition, wherein the hard segment is chosen from polybutylene terephthalate (PBT) or polyethylene terephthalate (PET), and the soft segment is chosen from the group consisting of poly(ethylene oxide) (PEO), polypropylene oxide (PPO) and polytetramethylene oxide (PTMO), PEO-PPO-PEO, and combinations thereof;
b. Bringing the composition to a foaming temperature of between (Tm-100) °C and Tm, in which Tm is the melting temperature of the hard segment of the thermoplastic copolyester elastomer composition as measured according to ISO 11357-1:1997 by DSC in the second heating curve, with a heating and cooling rate of 10 °C per min, under nitrogen atmosphere;
c. Providing a physical blowing agent under pressure to the composition while maintaining the pressure and allowing the physical blowing agent to substantially dissolve in the composition;
d. Releasing the pressure thereby forming the foamed composition.

13. Process according to claim 12 wherein the physical blowing agent comprises hydrocarbons such as pentane, isopentane, cyclopentane, butane, isobutene, CO₂ and N₂ and mixtures thereof.

14. Process according to claim 12 where in step b) the foaming temperature is at most (Tm-5).

15. Process according to claim 12 where in step b) the foaming temperature is at most (Tm-10).

16. Process according to claim 12 wherein the pressure in step d) is released at a rate of at least 100 Bar per second.

## Patentansprüche

1. Geschäumte Zusammensetzung, umfassend ein thermoplastisches Copolyesterelastomer in einer Menge zwischen 70 bis 99 Gew.-%, wobei das Elastomer Hart- und Weichsegmente umfasst, und einen Weichmacher in einer Menge zwischen 1 bis 30 Gew.-%, bezogen auf die Gesamtmenge der Zusammensetzung, wobei das Hartsegment aus Polybutylenterephthalat (PBT) oder Polyethylenterephthalat (PET) ausgewählt ist und das Weichsegment aus der Gruppe bestehend aus Poly(ethylenoxid) (PEO), Polypropylenoxid (PPO) und Polytetramethylenoxid (PTMO), PEO-PPO-PEO und Kombinationen davon ausgewählt ist.

2. Geschäumte Zusammensetzung nach Anspruch 1, wobei die Dichte der geschäumten Zusammensetzung zwischen 0,15 und 0,5 g/cm³ liegt.

3. Geschäumte Zusammensetzung nach Anspruch 1, wobei die Dichte der geschäumten Zusammensetzung zwischen 0,1 und 0,3 g/cm³ liegt.

4. Geschäumte Zusammensetzung nach Anspruch 1, wobei die Dichte der geschäumten Zusammensetzung zwischen 0,12 und 0,3 g/cm³ liegt.

5. Geschäumte Zusammensetzung nach einem der obigen Ansprüche, wobei die Weichmachermenge zwischen 5 und 25 Gew.-%, bezogen auf die Gesamtmenge der Zusammensetzung, liegt.

6. Geschäumte Zusammensetzung nach einem der obigen Ansprüche, wobei die Weichmachermenge zwischen 8 und 20 Gew.-%, bezogen auf die Gesamtmenge der Zusammensetzung, liegt.

7. Geschäumte Zusammensetzung nach einem der obigen Ansprüche, wobei der Weichmacher aus der Gruppe bestehend aus (Tere)phthalaten und Estern davon, Estern zweibasiger Säuren, Mellitaten und Estern davon, Cyclohexanoatestern, Citratestern, Phosphatestern, Estern von modifiziertem Pflanzenöl, Benzonatestern und Petroleumölen und Kombinationen davon ausgewählt ist.

8. Geschäumte Zusammensetzung nach einem der obigen Ansprüche, wobei der Weichmacher aus der Gruppe bestehend aus Triphenylphosphat (TPP), tert-Butylphenyldiphenylphosphat (Mono-t-but-TPP), Di-tert-butylphenylphenylphosphat (Bis-t-but-TPP), Tris(p-tert-butylphenyl)phosphat (Tri-t-but-TPP), Resorcinolbis(diphenylphosphat) (RDP), Dichlorpropylphosphat, Bisphenol-A-bis(diphenylphosphat) (BDP), Tricresylphosphat (TCP), Triethylphosphat, Tributylphosphat (TBP), Tri-2-ethylhexylphosphat, Trimethylphosphat, epoxidiertem Sojaöl (ESO), epoxidiertem Palmöl (EPO), epoxidiertem Leinsamenöl (ELO), Arganöl und Kombinationen davon ausgewählt ist.

9. Geschäumte Zusammensetzung nach einem der obigen Ansprüche, wobei der Weichmacher epoxidiertes Sojaöl (ESO), epoxidiertes Palmöl (EPO), epoxidiertes Leinsamenöl (ELO) und Arganöl enthält.

10. Gegenstand, umfassend die geschäumte Zusammensetzung nach einem der obigen Ansprüche.

11. Gegenstand nach Anspruch 10, wobei es sich bei dem Gegenstand um eine Schuhinnensohle oder eine Mittelsohle handelt.

12. Festkörper-Verschäumungsverfahren zur Herstellung einer geschäumten Zusammensetzung nach einem der Ansprüche 1 bis 9, das die folgenden Schritte umfasst:
a. Bereitstellen einer Zusammensetzung, umfassend ein thermoplastisches Copolyesterelastomer in einer Menge zwischen 70 bis 99 Gew.-%, wobei das Elastomer Hart- und Weichsegmente umfasst, und einen Weichmacher in einer Menge zwischen 1 bis 30 Gew.-%, bezogen auf die Gesamtmenge der Zusammensetzung, wobei das Hartsegment aus Polybutylenterephthalat (PBT) oder Polyethylenterephthalat (PET) ausgewählt ist und das Weichsegment aus der Gruppe bestehend aus Poly(ethylenoxid) (PEO), Polypropylenoxid (PPO) und Polytetramethylenoxid (PTMO), PEO-PPO-PEO und Kombinationen davon ausgewählt ist;
b. Bringen der Zusammensetzung auf eine Verschäumungstemperatur zwischen (Tm-100) °C und Tm, wobei Tm die Schmelztemperatur des Hartsegments der thermoplastisches Copolyesterelastomer enthaltenden Zusammensetzung gemäß Messung nach ISO 11357-1:1997 mittels DSC in der zweiten Aufheizkurve mit einer Aufheiz- und Abkühlungsrate von 10 °C pro min unter Stickstoffatmosphäre ist;
c. Zuführen eines physikalischen Treibmittels unter Druck zu der Zusammensetzung unter Aufrechterhaltung des Drucks und Zulassen, dass sich das physikalische Treibmittel weitgehend in der Zusammensetzung löst;
d. Ablassen des Drucks, wodurch die geschäumte Zusammensetzung gebildet wird.

13. Verfahren nach Anspruch 12, wobei das physikalische Treibmittel Kohlenwasserstoffe wie Pentan, Isopentan, Cyclopentan, Butan, Isobuten, CO₂ und N₂ und Mischungen davon umfasst.

14. Verfahren nach Anspruch 12, wobei in Schritt b) die Verschäumungstemperatur höchstens (Tm-5) beträgt.

15. Verfahren nach Anspruch 12, wobei in Schritt b) die Verschäumungstemperatur höchstens (Tm-10) beträgt.

16. Verfahren nach Anspruch 12, wobei der Druck in Schritt d) mit einer Rate von mindestens 100 bar pro Sekunde abgelassen wird.

## Revendications

1. Composition moussée comprenant un élastomère de copolyester thermoplastique en une quantité comprise entre 70 et 99 % en poids, ledit élastomère comprenant des segments durs et souples, et un plastifiant en une quantité comprise entre 1 et 30 % en poids sur la base de la quantité totale de la composition, le segment dur étant choisi parmi un poly(téréphtalate de butylène) (PBT) et un poly(téréphtalate d'éthylène) (PET), et le segment souple étant choisi dans le groupe constitué par un poly(oxyde d'éthylène) (PEO), un poly(oxyde de propylène) (PPO) et un poly(oxyde de tétraméthylène) (PTMO), un PEO-PPO-PEO, et des combinaisons correspondantes.

2. Composition moussée selon la revendication 1, la densité de la composition moussée étant comprise entre 0,15 et 0,5 g/cm³.

3. Composition moussée selon la revendication 1, la densité de la composition moussée étant comprise entre 0,1 et 0,3 g/cm³.

4. Composition moussée selon la revendication 1, la densité de la composition moussée étant comprise entre 0,12 et 0,3 g/cm³.

5. Composition moussée selon l'une quelconque des revendications ci-dessus, la quantité de plastifiant étant comprise entre 5 et 25 % en poids par rapport à la quantité totale de la composition.

6. Composition moussée selon l'une quelconque des revendications ci-dessus, la quantité de plastifiant étant comprise entre 8 et 20 % en poids par rapport à la quantité totale de la composition.

7. Composition moussée selon l'une quelconque des revendications ci-dessus, le plastifiant étant choisi dans le groupe constitué par des (téré)phtalates et des esters correspondants, des esters d'acide dibasique, des mellitates et des esters correspondants, des esters de cyclohexanoate, des esters de citrate, des esters de phosphate, des esters d'huile végétale modifiée, des esters de benzonate, et des huiles de pétrole et des combinaisons correspondantes.

8. Composition moussée selon l'une quelconque des revendications ci-dessus, le plastifiant étant choisi dans le groupe constitué par le phosphate de triphényle (TPP), le phosphate de tert-butylphényle diphényle (mono-t-but-TPP), le phosphate de di-tert-butylphényle phényle (bis-t-but-TPP), le phosphate de tris(p-tert-butylphényle) (tri-t-but-TPP), le bis(diphénylphosphate) de résorcinol (RDP), le phosphate de dichloropropyle, le bis(diphénylphosphate) de bisphénol A (BDP), le phosphate de tricrésyle (TCP), le phosphate de triéthyle, le phosphate de tributyle (TBP), le phosphate de tri-2-éthylhexyle, le phosphate de triméthyle, l'huile de soja époxydée (ESO), l'huile de palme époxydée (EPO), l'huile de lin époxydée (ELO), l'huile d'argan et des combinaisons correspondantes.

9. Composition moussée selon l'une quelconque des revendications ci-dessus, le plastifiant comprenant de l'huile de soja époxydée (ESO), de l'huile de palme époxydée (EPO), de l'huile de lin époxydée (ELO) et de l'huile d'argan.

10. Article comprenant la composition moussée selon l'une quelconque des revendications précédentes.

11. Article selon la revendication 10, l'article étant une semelle intérieure de chaussure ou une semelle intermédiaire.

12. Procédé de moussage à l'état solide pour la préparation d'une composition moussée selon l'une quelconque des revendications 1 à 9, comprenant les étapes suivantes :
a. mise à disposition d'une composition comprenant un élastomère de copolyester thermoplastique en une quantité comprise entre 70 et 99 % en poids, ledit élastomère comprenant des segments durs et souples, et un plastifiant en une quantité comprise entre 1 et 30 % en poids sur la base de la quantité totale de la composition, le segment dur étant choisi parmi un poly(téréphtalate de butylène) (PBT) et un poly(téréphtalate d'éthylène) (PET), et le segment souple étant choisi dans le groupe constitué par un poly(oxyde d'éthylène) (PEO), un poly(oxyde de propylène) (PPO) et un poly(oxyde de tétraméthylène) (PTMO), un PEO-PPO-PEO, et des combinaisons correspondantes ;
b. amenée de la composition à une température de moussage comprise entre (Tm - 100) °C et Tm, dans laquelle Tm est la température de fusion du segment dur de la composition d'élastomère de copolyester thermoplastique telle que mesurée selon la norme ISO 11357-1:1997 par DSC dans la deuxième courbe de chauffage, avec une vitesse de chauffage et de refroidissement de 10 °C par min, sous atmosphère d'azote ;
c. mise à disposition d'un agent de gonflement physique sous pression à la composition tout en maintenant la pression et le fait de laisser l'agent de gonflement physique se dissoudre sensiblement dans la composition ;
d. relâchement de la pression formant ainsi la composition moussée.

13. Procédé selon la revendication 12, l'agent de gonflement physique comprenant des hydrocarbures tels que le pentane, l'isopentane, le cyclopentane, le butane, l'isobutène, le CO₂ et le N₂ et des mélanges correspondants.

14. Procédé selon la revendication 12, dans lequel dans l'étape b), la température de moussage est d'au plus (Tm - 5) .

15. Procédé selon la revendication 12, dans lequel dans l'étape b), la température de moussage est d'au plus (Tm - 10).

16. Procédé selon la revendication 12, la pression dans l'étape d) étant relâchée à une vitesse d'au moins 100 bars par seconde.
